# EUROPEAN PATENT APPLICATION

(11) **EP 4 694 270 A1**
(43) Date of publication of application: **11.02.2026**
(21) Application number: 24779058.7
(22) Date of filing: 01.03.2024
(51) Int. Cl.: H04W 16/26, H04W 72/0446, H04W 84/12

(54) **COMMUNICATION DEVICE, COMMUNICATION METHOD, AND PROGRAM**

(30) Priority: 24.03.2023 JP 2023048715
(71) Applicant: Canon Kabushiki Kaisha, Tokyo, 146-8501 (JP)
(72) Inventor: INOHIZA Hirohiko, Tokyo 146-8501 (JP)
(74) Representative: Canon Europe Limited
(86) International application number: PCT/JP2024/007713
(87) International publication number: WO 2024/202920

(57) **Abstract**

A communication apparatus includes a unit configured to transmit, to an access point complying with an Institute of Electrical and Electronics Engineers (IEEE)802.11 series standard, a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame, and a unit configured to transmit the data frame to the relay communication apparatus in a case where the information for identifying the transmission source communication apparatus in the Trigger frame matches information for identifying the access point.

## Description

### Technical Field

The present invention relates to communication means for an access point and a station.

### Background Art

Along with recent increase in an amount of data to be communicated, communication techniques such as a wireless local area network (LAN) have been developed. As a main communication standard of the wireless LAN, an Institute of Electrical and Electronics Engineers (IEEE)802.11 standard series is known. The IEEE802.11 standard series includes IEEE802.11a/b/g/n/ac/ax/be standards.

In a succeeding standard (UHR) of IEEE802.11be, in addition to a method in which an access point (hereinafter, AP) and a station (hereinafter, STA) perform direct communication, a relay transmission technique in which a STA serving as a relay communication apparatus receives a data frame transmitted from an AP and relays and transmits the data frame to another STA, or an STA serving as a relay communication apparatus receives a data frame transmitted from another STA and relays and transmits the data frame to an AP has been studied in order to realize further improvement of throughput and expansion of a communication range. In addition, to control relay transmission, use of a Trigger frame complying with the IEEE802.11 series standard has been studied. Citation List

### Patent Literature

PTL 1: Japanese Patent Laid-Open No. 2021-72638

### Summary of Invention

### Technical Problem

A procedure for controlling the relay transmission of the data frame by using the Trigger frame complying with the IEEE802.11 series standard has not been defined.

In consideration of the above-described issue, the present invention is directed to definition of a procedure for controlling relay transmission of a data frame by using a Trigger frame complying with an IEEE802.11 series standard.

### Solution to Problem

To achieve the above-described object, a communication apparatus according to the present invention includes a communication unit configured to perform wireless communication at an access point complying with an Institute of Electrical and Electronics Engineers (IEEE)802.11 series standard, and includes a unit configured to transmit a Trigger frame including information for identifying a transmission source communication apparatus as a transmission source of a data frame, information for identifying a destination communication apparatus as a destination of the data frame, and information for identifying a relay communication apparatus relaying and transmitting the data frame, and a unit configured to transmit the data frame to the relay communication apparatus after the Trigger frame is transmitted.

### Advantageous Effects of Invention

According to the present invention, it is possible to perform the procedure for controlling the relay transmission of the data frame by using the Trigger frame complying with the IEEE802.11 series standard.

### Brief Description of Drawings

[Fig. 1] Fig. 1 is a diagram illustrating a first example of a configuration of a network according to the present invention.
[Fig. 2] Fig. 2 is a diagram illustrating a hardware configuration of an access point (AP)/station (STA) according to the present invention.
[Fig. 3] Fig. 3 is a diagram illustrating a functional configuration of the AP/STA according to the present invention.
[Fig. 4] Fig. 4 is a diagram illustrating a first example of a message sequence among communication apparatuses according to the present invention.
[Fig. 5] Fig. 5 is a diagram illustrating a second example of the message sequence among the communication apparatuses according to the present invention.
[Fig. 6] Fig. 6 is a diagram illustrating a first example of a format of a Trigger frame according to the present invention.
[Fig. 7] Fig. 7 is a diagram illustrating a second example of the format of the Trigger frame according to the present invention.
[Fig. 8] Fig. 8 is a flowchart illustrating relay transmission processing in the AP according to the present invention.
[Fig. 9] Fig. 9 is a flowchart illustrating a first example of relay transmission processing in the STA according to the present invention.
[Fig. 10] Fig. 10 is a diagram illustrating a second example of the configuration of the network according to the present invention.
[Fig. 11] Fig. 11 is a diagram illustrating a third example of the message sequence among the communication apparatuses according to the present invention.
[Fig. 12] Fig. 12 is a diagram illustrating a fourth example of the message sequence among the communication apparatuses according to the present invention.
[Fig. 13] Fig. 13 is a flowchart illustrating a second example of the relay transmission processing in the STA according to the present invention.

### Description of Embodiments

Some embodiments of the present invention are described in detail below with reference to accompanying drawings. Note that configurations described in the following embodiments are merely illustrative, and the present invention is not limited to illustrated configurations.

### [First Embodiment]

### (Configuration of Wireless Communication System)

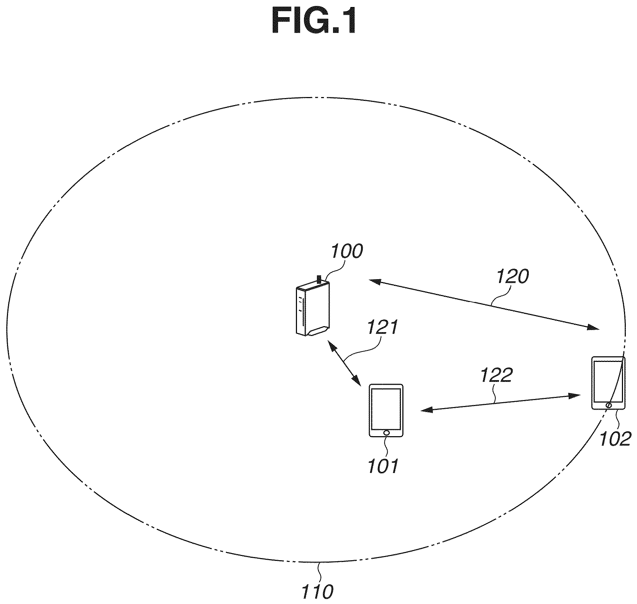

Fig. 1 illustrates a configuration of a network in which an access point (AP) 100 participates according to the present embodiment. Each of a station (STA) 101 and an STA 102 is a station having a role of participating in a wireless network 110. The AP 100 is an AP having a role of constructing the wireless network 110. In the present embodiment, the STA 101 and the STA 102 are both positioned within a communication range of the wireless network 110 with the AP 100.

Each of the AP 100, the STA 101, and the STA 102 can perform wireless communication complying with a succeeding standard (hereinafter, UHR) of Institute of Electrical and Electronics Engineers (IEEE)802.11. Note that IEEE is an abbreviation for Institute of Electrical and Electronics Engineers. Each of the AP 100, the STA 101, and the STA 102 can perform communication at frequencies in a 2.4 GHz band, a 5 GHz band, and a 6 GHz band. The frequency bands used by each of the communication apparatuses are not limited thereto, and another frequency band, for example, a 60 GHz band may be used. Further, each of the AP 100, the STA 101, and the STA 102 can perform communication by using band widths of 20 MHz, 40 MHz, 80 MHz, 160 MHz, and 320 MHz. The band widths used by each of the communication apparatuses are not limited thereto, and other band widths, for example, 240 MHz and 4 MHz may be used.

Each of the AP 100, the STA 101, and the STA 102 can realize multiuser (MU) communication in which signals of a plurality of users are multiplexed by performing orthogonal frequency division multiple access (OFDMA) communication complying with UHR. OFDMA is an abbreviation for orthogonal frequency division multiple access. In the OFDMA communication, a part (RU, resource unit) of divided frequency bands is allocated to each of the AP/STAs without overlapping, and carrier waves of the respective AP/STAs are orthogonal to each other. Therefore, the AP/STAs can perform communication in parallel with a plurality of APs/STAs in prescribed band widths.

Each of the AP 100, the STA 101, and the STA 102 supports the UHR standard, but may additionally support legacy standards that are standards before the UHR standard. More specifically, each of the AP 100, the STA 101, and the STA 102 may support at least any of IEEE802.11a/b/g/n/ac/ax/be standards. Further, each of the AP 100, the STA 101, and the STA 102 may support other communication standards such as Bluetooth^{®}, near field communication (NFC), ultra wide band (UWB), ZigBee, and multi band OFDM alliance (MBOA), in addition to the IEEE802.11 series standards. UWB is an abbreviation for ultra wide band, and MBOA is an abbreviation for multi band OFDM alliance. NFC is an abbreviation for near field communication. UWB includes wireless universal serial bus (USB), wireless 1394, WiNET, and the like. Further, each of the AP 100, the STA 101, and the STA 102 may support a communication standard of wired communication such as a wired local area network (LAN). Specific examples of the AP 100 include a wireless LAN router and a personal computer (PC); however, the AP 100 is not limited thereto. The AP 100 may be an information processing apparatus such as a wireless chip that can perform wireless communication complying with the UHR standard.

Specific examples of the STA 101 and the STA 102 include a camera, a tablet, a smartphone, a PC, a mobile phone, and a video camera; however, the STA 101 and the STA 102 are not limited thereto.

Each of the STA 101 and the STA 102 may be an information processing apparatus such as a wireless chip that can perform wireless communication complying with the UHR standard. The wireless network illustrated in Fig. 1 includes one AP and two STAs; however, the number of APs and STAs and arrangement are not limited thereto.

Each of the AP 100, the STA 101, and the STA 102 may perform multiple-input and multiple-output (MIMO) communication. In this case, each of the AP 100, the STA 101, and the STA 102 includes a plurality of antennae, and one apparatus transmits different signals from different antennae through the same frequency channel. A reception-side apparatus simultaneously receives all signals arrived from a plurality of streams by using the plurality of antennae, separates and decodes the signals of the respective streams. As described above, by performing the MIMO communication, each of the AP 100, the STA 101, and the STA 102 can communicate more data in the same time as compared with a case where the MIMO communication is not performed.

The AP 100 can realize multi user (MU) communication in which signals of a plurality of users are multiplexed, by performing OFDMA communication complying with the UHR standard. The OFDMA communication is an abbreviation for orthogonal frequency division multiple access. In the OFDMA communication, divided frequency resources (resource units (RUs)) are allocated to the AP/STAs without overlapping, and carrier waves allocated to the AP/STAs are orthogonal to each other. The AP 100 can allocate the frequency resources to the STAs participating in the network.

The AP 100 can directly communicate with the STA 101 in a range of the wireless network 110 via a communication link 121, and can directly communicate with the STA 102 via a communication link 120. In addition, by relay transmission by the STA 101, the AP 100 can communicate with the STA 102 via the communication link 121 between the AP 100 and the STA 101 and a communication link 122 between the STA 101 and the STA 102. The AP 100 can determine whether to perform direct communication or relay transmission by, for example, acquiring communication quality between the AP 100 and the STA 101 from the STA 101, acquiring communication quality between the AP 100 and the STA 102 from the STA 102, and acquiring communication quality between the STA 101 and the STA 102 from the STA 101 or the STA 102. The communication quality is measured by measuring, for example, a received signal strength indicator (RSSI), a signal to noise ratio (SNR), a data rate, a delay time, and the like when a data frame, a management frame, and a control frame are received.

### (Configurations of AP and STAs)

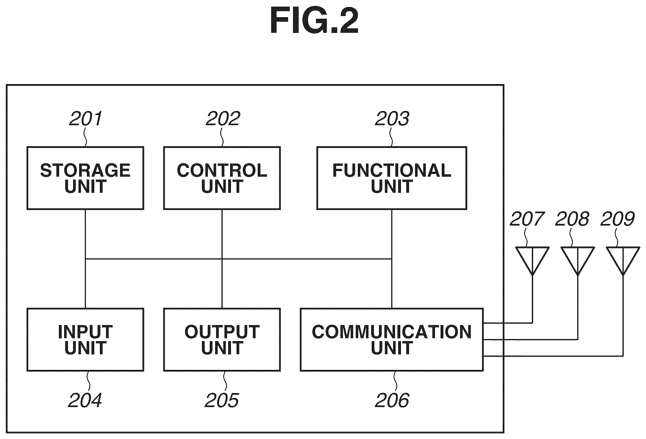

Fig. 2 illustrates a hardware configuration example of each of the AP 100, the STA 101, and the STA 102 according to the present embodiment. Each of the AP 100, the STA 101, and the STA 102 includes a storage unit 201, a control unit 202, a functional unit 203, an input unit 204, an output unit 205, a communication unit 206, and antennae 207, 208, and 209. Note that only antenna 207 may be provided.

The storage unit 201 includes one or more memories such as a read only memory (ROM) and a random access memory (RAM), and stores computer programs for performing various kinds of operation described below, and various kinds of information such as communication parameters for wireless communication. ROM is an abbreviation for a read only memory, and RAM is an abbreviation for a random access memory. As the storage unit 201, in addition to the memories such as the ROM and the RAM, a storage medium such as a flexible disk, a hard disk, an optical disk, a magnetooptical disk, a compact disk read only memory (CD-ROM), a compact disk recordable (CD-R), a magnetic tape, a nonvolatile memory card, and a digital versatile disk (DVD) may be used. Further, the storage unit 201 may include a plurality of memories and the like.

The control unit 202 includes, for example, one or more processors such as a central processing unit (CPU) and a micro processing unit (MPU), and controls the whole of the AP 100, STA 101, or STA 102 by executing the computer programs stored in the storage unit 201. The control unit 202 may control the whole of the AP 100, STA 101, or STA 102 in cooperation with the computer programs and operating system (OS) stored in the storage unit 201. The control unit 202 generates data and signals (wireless frames) to be transmitted in communication with another communication apparatus. CPU is an abbreviation for a central processing unit, and MPU is an abbreviation for a micro processing unit. The control unit 202 may include a plurality of processors such as a multicore, and the plurality of processors may control the whole of the AP 100, STA 101, or STA 102.

The control unit 202 controls the functional unit 203 to perform predetermined processing such as wireless communication, imaging, printing, and projection. The functional unit 203 is hardware for the AP 100, STA 101, or STA 102 to perform the predetermined processing.

The input unit 204 receives various kinds of operation from a user. The output unit 205 performs various kinds of outputs to the user through a monitor screen and a speaker. The outputs by the output unit 205 may be display on the monitor screen, sound output by the speaker, vibration output, and the like. Both the input unit 204 and the output unit 205 may be implemented by one module like a touch panel. The input unit 204 and the output unit 205 may be integrated with or separated from the corresponding AP 100, STA 101, or STA 102.

The communication unit 206 controls wireless communication complying with the UHR standard. The communication unit 206 may control wireless communication complying with another IEEE802.11 series standard in addition to the UHR standard, and may control wired communication such as a wired LAN. The communication unit 206 controls the antennae 207, 208, and 209 to transmit and receive signals for wireless communication generated by the control unit 202.

In a case where each of the AP 100, the STA 101, and the STA 102 supports an NFC standard, Bluetooth standard, and other standards in addition to the UHR standard, the communication unit 206 may control wireless communication complying with these communication standards. In a case where each of the AP 100, the STA 101, and the STA 102 can perform wireless communication complying with a plurality of communication standards, the communication units and the antennae corresponding to the respective communication standards may be individually provided. The AP 100 communicates data such as image data, document data, and video image data with the STA 101 and the STA 102 via the communication unit 206. The antennae 207, 208, and 209 may be configured separately from the communication unit 206, or may be combined with the communication unit 206 as one module.

The antennae 207, 208 and 209 can perform communication in the 2.4 GHz band, the 5 GHz band, and the 6 GHz band. In the present embodiment, each of the AP 100, the STA 101, and the STA 102 includes three antennae, but may include one antenna. Alternatively, each of the AP 100, the STA 101, and the STA 102 may include different antennae for respective frequency bands. In a case where each of the AP 100, the STA 101, and the STA 102 includes the plurality of antennae, each of the AP 100, the STA 101, and the STA 102 may include communication units 206 corresponding to the respective antennae.

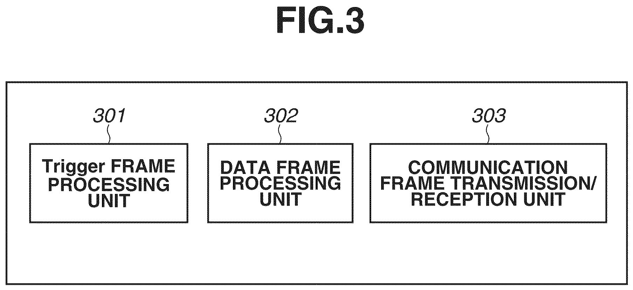

Fig. 3 is a block diagram illustrating a functional configuration of each of the AP 100, the STA 101, and the STA 102 according to the present embodiment. In a case of the AP 100, a Trigger frame processing unit 301 is a block generating a Trigger frame to be transmitted, and in a case of the STA 101 or the STA 102, the Trigger frame processing unit 301 is a block analyzing and processing the received Trigger frame. A data frame processing unit 302 is a block handling a data frame to be transmitted or a received data frame. In a case where each of the AP 100, the STA 101 and the STA 102 is a data transmission source communication apparatus, the data frame processing unit 302 generates a data frame. In a case where each of the AP 100, the STA 101 and the STA 102 is a data relay communication apparatus, the data frame processing unit 302 generates a data frame to be relayed, from the received data frame. In a case where each of the AP 100, the STA 101 and the STA 102 is a data destination communication apparatus, the data frame processing unit 302 processes the received data frame. A communication frame transmission/reception unit 102 is a block that transmits and receives a control frame such as the Trigger frame, a request to send (RTS) frame, and a clear to send (CTS) frame, a management frame such as a Beacon frame, an Association frame, and a block ACK (BA) frame, and the data frame.

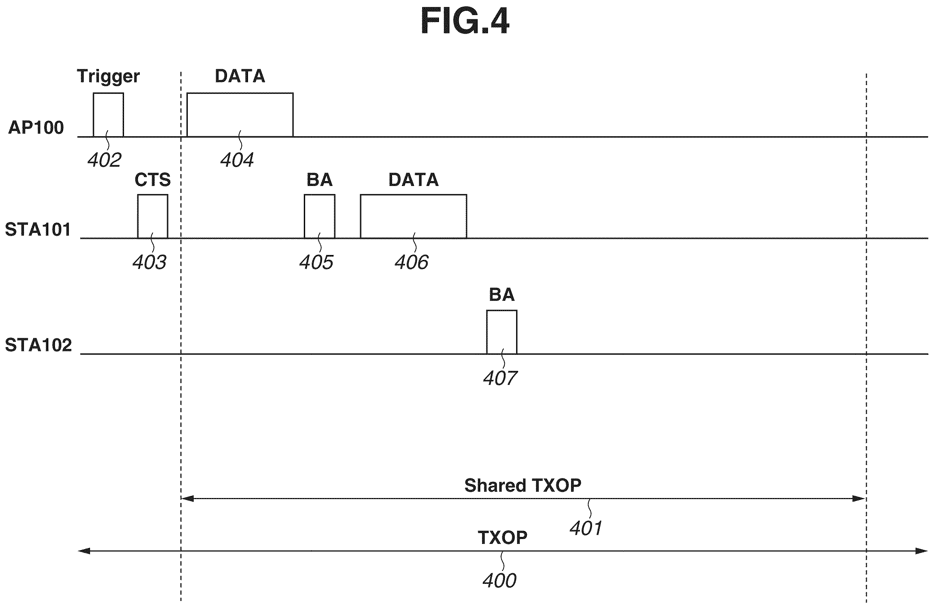

Fig. 4 is a diagram illustrating a first example of a message sequence among the communication apparatuses according to the present invention. In this example, the STA 101 serves as a relay communication apparatus, and relays and transmits a data frame transmitted from the AP 100, to the STA 102.

A reference numeral 400 is a transmission opportunity (TXOP) secured by the AP 100. The AP 100 can share a part of the secured TXOP with another communication apparatus by using a Trigger frame 402. In this example, a Shared TXOP 401, which is a part of the TXOP 400 is shared with the STA 101.

The AP 100 designates a transmission source communication apparatus, a relay communication apparatus, and a destination communication apparatus of a data frame in the Trigger frame 402. In this example, the AP 100 is designated as the transmission source communication apparatus, the STA 101 is designated as the relay communication apparatus and the STA 102 is designated as the destination communication apparatus. The STA 101 transmits a CTS frame 403 as a response when receiving the Trigger frame 402.

Thereafter, the AP 100 transmits a data frame 404 to the STA 101, and the STA 101 that has received the data frame 404 transmits a BA frame 405 to the AP 100. The STA 101 recognizes that the STA 101 is designated as the relay communication apparatus and the TXOP is shared, from the received Trigger frame, generates a data frame 406 for relay transmission from the received data frame 404, and relays and transmits the data frame 406 to the STA 102. The STA 102 that has received the data frame 406 transmits a BA frame 407 to the STA 101. In this example, an example in which the data frame 404, the BA frame 405, the data frame 406, and the BA frame 407 all reach the corresponding partner communication apparatuses without an error is described. In a case where any of the communication frames does not reach the partner communication apparatus, data frame retransmission processing is performed within a range of the Shared TXOP 401.

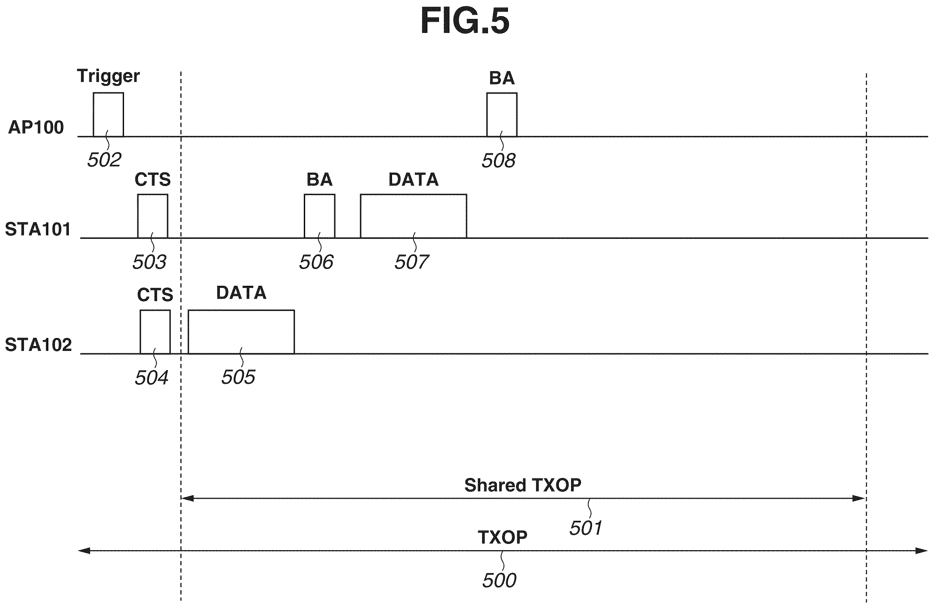

Fig. 5 is a diagram illustrating a second example of the message sequence among the communication apparatuses according to the present invention. In this example, the STA 101 is designated as the relay communication apparatus, and relays and transmits a data frame transmitted from the STA 102, to the AP 100.

A reference numeral 500 is a TXOP secured by the AP 100. The AP 100 can share a part of the secured TXOP with another communication apparatus by using a Trigger frame 502. In this example, a Shared TXOP 501 which is a part of the TXOP 500 is shared with the STA 102 and the STA 101. The AP 100 designates a transmission source communication apparatus, a relay communication apparatus, and a destination communication apparatus of the data frame in a Trigger frame 502. In this example, the STA 102 is designated as the transmission source communication apparatus, the STA 101 is designated as the relay communication apparatus, and the AP 100 is designated as the destination communication apparatus. The STA 102 transmits a CTS frame 504 as a response when the Trigger frame 502 is received, and the STA 101 transmits a CTS frame 503 as a response when the Trigger frame 502 is received.

The STA 102 determines that the STA 102 is designated as the transmission source communication apparatus and the TXOP is shared, from the received Trigger frame, and transmits a data frame 505 to the STA 101. Subsequently, the STA 101 that has received the data frame 505 transmits a BA frame 506 to the STA 102. The STA 101 determines that the STA 101 is designated as the relay communication apparatus and the TXOP is shared, from the received Trigger frame, generates a data frame 507 for relay transmission from the received data frame 505, and relays and transmits the data frame 507 to the AP 100. The AP 100 that has received the data frame 507 transmits a BA frame 508 to the STA 101. In this example, an example in which the data frame 505, the BA frame 506, the data frame 507, and the BA frame 508 all reach the corresponding partner communication apparatuses without an error is described. In a case where any of the communication frames does not reach the partner communication apparatus, data frame retransmission processing is performed within a range of the Shared TXOP 501.

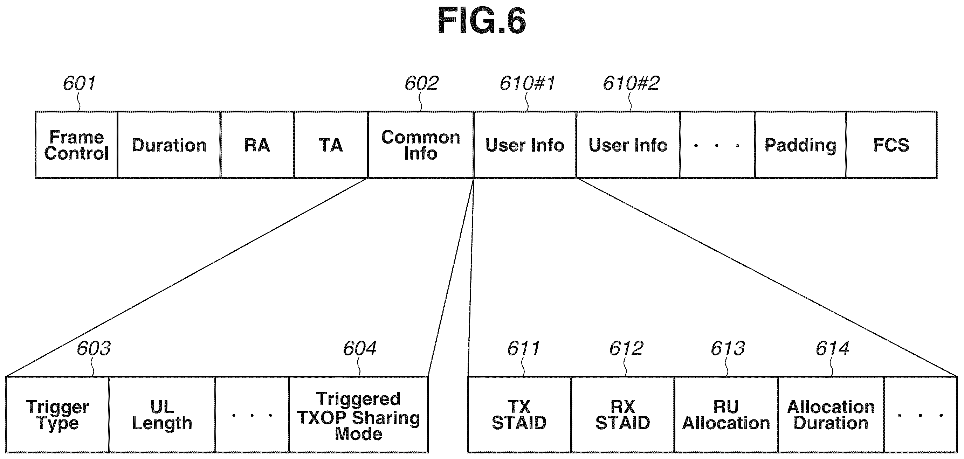

Fig. 6 is a diagram illustrating a first example of a format of the Trigger frame according to the present invention.

A Frame Control (601) field includes a Type subfield and a Subtype subfield each indicating a frame type. A combination of a Type subfield = 01 and a Subtype field = 0010 indicates that the frame type is the Trigger frame. A Duration field, an RA field, and a TA field are in accordance with contents of a MAC frame in the IEEE802.11 standard.

A Common Info (602) field includes information common to all STAs that receive the Trigger frame. A Trigger Type (603) subfield included in the Common Info (602) field indicates a type of the Trigger frame as illustrated in Table 1.

**[Table 1]**

| Subfield value | Trigger frame type |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

In the present invention, it is assumed that a MU-RTS Trigger frame of Trigger Type Subfield = 3 is used. As another method, for example, Trigger Type of a Trigger frame for relay transmission may be newly defined and used from values Reserved in Table 1.

A UL Length subfield is in accordance with contents of a MAC frame in the IEEE802.11 standard.

A Triggered TXOP Sharing Mode (604) subfield indicates a mode of TXOP Sharing of the MU-RTS Trigger frame as illustrated in Table 2.

**[Table 2]**

| Subfield value | Contents |
|---|---|
| 0 | MU-RTS that does not initiate MU-RTS TXOP sharing procedure |
| 1 | MU-RTS that initiates MU-RTS TXOP sharing procedure wherein scheduled STA can only transmit MPDU addressed to its associated AP |
| 2 | MU-RTS that initiates MU-RTS TXOP sharing procedure wherein scheduled STA can transmit MPDU addressed to its associated AP or addressed to another STA |
| 3 | MU-RTS that initiates MU-RTS TXOP sharing procedure wherein scheduled STA can relay and transmit received MPDU to another STA or AP |

In the present embodiment, Triggered TXOP Sharing Mode subfield = 3 indicates that TXOP Sharing procedure for relaying and transmitting a wireless frame received by the scheduled STA to another STA or AP can be started. A subfield different from the Triggered TXOP Sharing Mode subfield may be prepared to indicate similar information.

User Info (610#1, 610#2, ...) fields include information on respective STAs with which a part of the TXOP is shared for relay transmission. A TX STAID (611) subfield holds information for identifying a communication apparatus transmitting a data frame. STAID may be, for example, a MAC address, a part of the MAC address, an association identifier (AID), a part of the AID, or other identification information. The AP allocates the AID to the STA when the STA connects to the AP, but as an AID of the AP, a predetermined value previously determined for the AP may be used. An RX STAID (612) subfield holds information for identifying a communication apparatus that receives the data frame transmitted from a communication apparatus identified by the TX STAID (611) subfield. Based on a storing order of the User Info fields, the communication apparatus performs relay transmission of the data frame. For example, in a case where relay transmission of the data frame is performed by the sequence illustrated in Fig. 4, the TX STAID subfield of the User Info (601#1) field is the STAID of the AP 100, and the RX STAID subfield is the STAID of the STA 101. Further, the TX STAID subfield of the User Info (601#2) field is the STAID of the STA 101, and the RX STAID subfield is the STAID of the STA 102. For example, in a case where relay transmission of the data frame is performed by the sequence illustrated in Fig. 5, the TX STAID subfield of the User Info (601#1) field is the STAID of the STA 102, and the RX STAID subfield is the STAID of the STA 101. Further, the TX STAID subfield of the User Info (601#2) field is the STAID of the STA 101, and the RX STAID subfield is the STAID of the AP 100. Further, by using three or more User Info fields, it is possible to perform relay transmission by two or more relay communication apparatuses. The STA designated in the TX STAID subfield of the User Info field recognizes that a part of the TXOP is shared, and obtains a transmission right. An RU Allocation (613) subfield indicates allocation information on RUs in the OFDMA communication. An Allocaiton Duration subfield indicates information on a communication time of the data frame.

A Padding field and an FCS field are in accordance with contents of a MAC frame in the IEEE802.11 standard.

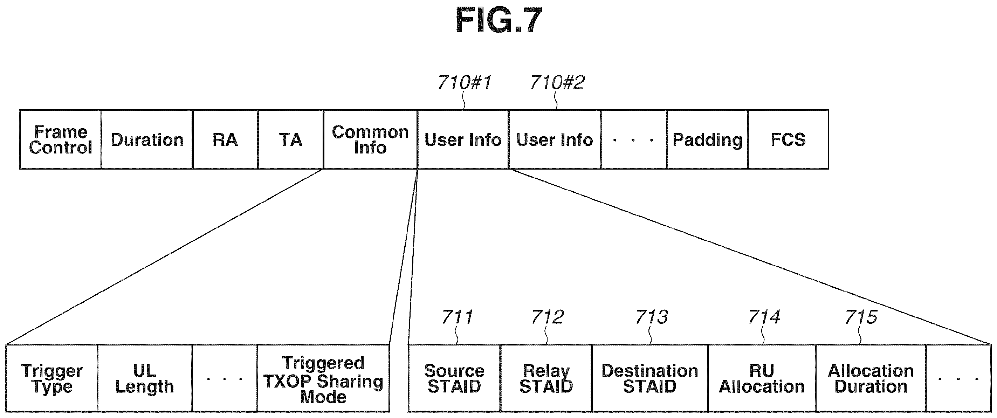

Fig. 7 is a diagram illustrating a second example of the format of the Trigger frame according to the present invention.

A difference from Fig. 6 is contents of the User Info field. User Info fields (710#1, 710#2, ...) include information on respective STAs with which a part of the TXOP is shared for relay transmission. A Source STAID (711) subfield holds information for identifying a transmission source communication apparatus of the data frame. A Relay STAID (712) subfield holds information for identifying a relay communication apparatus of the data frame. A Destination STAID (713) field holds information for identifying a destination communication apparatus of the data frame. Based on a storing order of the STAIDs, the communication apparatus performs relay transmission of the data frame. For example, in the case where relay transmission of the data frame is performed by the sequence illustrated in Fig. 4, the Source STAID subfield of the User Info (701#1) field is the STAID of the AP 100, the Relay STAID subfield is the STAID of the STA 101, and the Destination STAID subfield is the STAID of the STA 102. For example, in the case where relay transmission of the data frame is performed by the sequence illustrated in Fig. 5, the Source STAID subfield of the User Info (701#1) field is the STAID of the STA 102, the Relay STAID subfield is the STAID of the STA 101, and the Destination STAID subfield is the STAID of the AP 100. Further, by using two or more Relay STAID subfields in one User Info field, it is possible to perform relay transmission by two or more relay communication apparatuses. An RU Allocation (713) subfield indicates allocation information on RUs in the series of OFDMA communication by the Source STAID (711) subfield, the Relay STAID (712) subfield, and the Destination STAID (713) subfield. An Allocaiton Duration subfield indicates information on a communication time. By using a plurality of User Info fields, it is possible to control relay transmission for each RU of the OFDMA communication. The STA designated in the Source STAID subfield or the Relay STAID subfield by the User Info field recognizes that a part of the TXOP is shared, and obtains a transmission right.

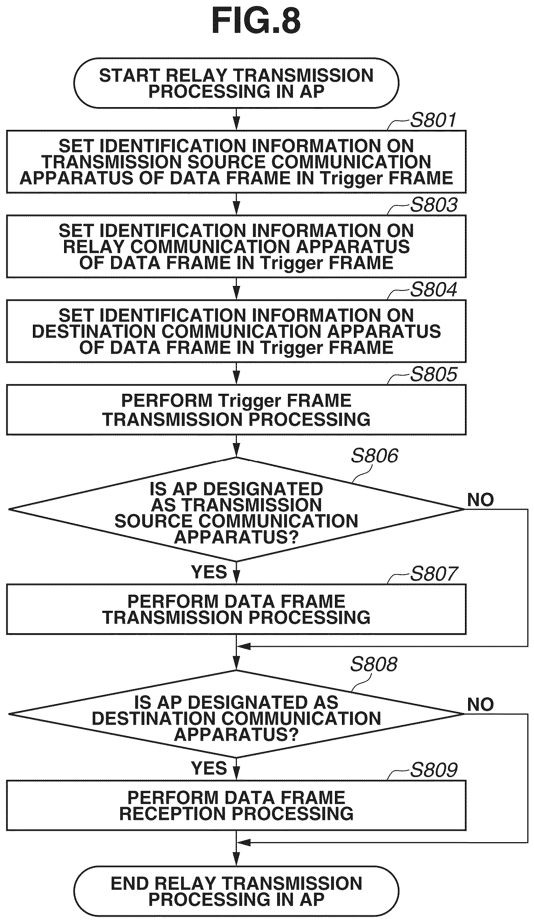

Fig. 8 is a flowchart illustrating relay transmission processing in the AP according to the present invention. The AP determines whether to perform direct communication or relay transmission based on communication quality between the AP and the STA and communication quality between the STA and the STA, and starts the processing based on the fact that the AP determines to perform relay transmission.

In step S801, the AP 100 sets identification information on the transmission source communication apparatus of the data frame in the Trigger frame. For example, in a case of using the Trigger frame illustrated in Fig. 6, the AP 100 sets the identification information on the transmission source communication apparatus in the TX STAID subfield of the first User Info field. In a case of using the Trigger frame illustrated in Fig. 7, the AP 100 sets the identification information on the transmission source communication apparatus in the Source STAID subfield of the User Info field.

Next, in step S803, the AP 100 sets identification information on the relay communication apparatus of the data frame in the Trigger frame. For example, in the case of using the Trigger frame illustrated in Fig. 6, the AP 100 sets the identification information on the relay communication apparatus in the RX STAID subfield of the first User Info field and the TX STAID subfield of the second User Info field. In a case of using two relay communication apparatuses, the AP 100 may further set identification information on a second relay communication apparatus in the RX STAID subfield of the second User Info field and the TX STAID subfield of the third User Info field. In the case of using the Trigger frame illustrated in Fig. 7, the AP 100 sets the identification information on the relay communication apparatus in the Relay STAID subfield of the User Info field.

Next, in step S804, the AP 100 sets identification information on the destination communication apparatus of the data frame in the Trigger frame. For example, in the case of using the Trigger frame illustrated in Fig. 6, the AP 100 sets the identification information on the destination communication apparatus in the RX STAID subfield of the last User Info field. In the case of using the Trigger frame illustrated in Fig. 7, the AP 100 sets the identification information on the relay communication apparatus in the Destination STAID subfield of the User Info field.

In step S805 after the AP 100 sets the other parameters of the Trigger frame, the AP 100 performs Trigger frame transmission processing. The processing in step S805 includes CTS frame reception processing after transmission of the Trigger frame.

Next, in step S806, the AP 100 determines whether the AP 100 is designated as the transmission source communication apparatus of the data frame. In a case where the AP 100 is designated as the transmission source communication apparatus of the data frame, the AP 100 performs data frame transmission processing in step S807. In a case where the AP 100 is not designated as the transmission source communication apparatus of the data frame, the processing in step S807 is skipped. The processing in step S807 includes reception of the BA frame after transmission of the data frame, and data frame retransmission processing.

Next, in step S808, the AP 100 determines whether the AP 100 is designated as the destination communication apparatus of the data frame. In a case where the AP 100 is designated as the destination communication apparatus of the data frame, the AP 100 performs data frame reception processing in step S809. In a case where the AP 100 is not designated as the destination communication apparatus of the data frame, the processing in step S809 is skipped. The processing in step S809 includes transmission of the BA frame after reception of the data frame, and retransmitted data frame reception processing.

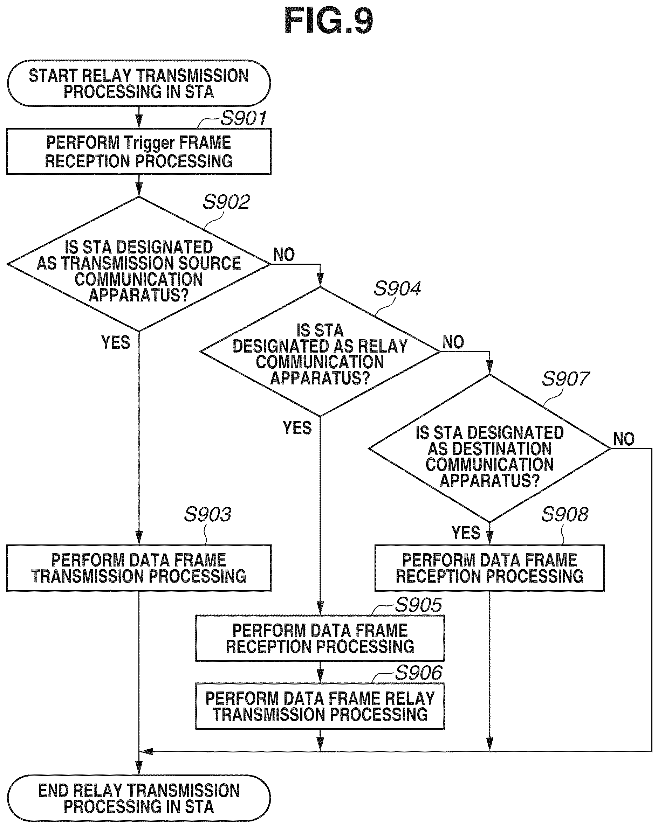

Fig. 9 is a flowchart illustrating a first example of relay transmission processing in the STA according to the present invention. The STA starts the processing in response to reception of the Trigger frame for controlling relay transmission. It is possible to determine whether the Trigger frame is the Trigger frame for controlling relay transmission, from values in the Trigger Type subfield and the Triggered TXOP Sharing Mode subfield of the Trigger frame illustrated in Fig. 6 or Fig. 7.

In step S901, the STA performs Trigger frame reception processing, and extracts necessary parameters such as the Common Info field and the User Info field. The processing in step S901 includes CTS frame transmission processing after reception of the Trigger frame.

Next, in step S902, the STA determines whether the information on the transmission source communication apparatus of the data frame included in the User Info field indicates the STA itself. In the case where the information indicates the STA itself, the STA performs data frame transmission processing in step S903. For example, in the case of using the Trigger frame illustrated in Fig. 6, the STA determines whether the TX STAID subfield of the first User Info field matches the STAID of the STA. In the case of using the Trigger frame illustrated in Fig. 7, the STA determines whether the Source STAID subfield of the User Info field matches the STAID of STA itself. The processing in step S903 includes BA frame reception after transmission of the data frame, and data frame retransmission processing.

In step S902, in a case where the STA determines that the information on the transmission source communication apparatus of the data frame does not indicate the STA itself, the processing proceeds to step S904. In step S904, the STA determines whether the information on the relay communication apparatus of the data frame included in the User Info field indicates the STA itself. In a case where the information indicates the STA itself, the STA performs data frame reception processing in step S905. For example, in the case of using the Trigger frame illustrated in Fig. 6, the STA determines whether the RX STAID subfield of the first User Info field matches the STAID of STA itself, and the TX STAID subfield of the second User Info field matches the STAID of the STA itself. In a case of two relay communication apparatuses, the STA further determines whether the RX STAID subfield of the second User Info field matches the STAID of the STA itself, and the TX STAID subfield of the third User Info field matches the STAID of the STA itself. In the case of using the Trigger frame illustrated in Fig. 7, the STA determines whether the Relay STAID subfield of the User Info field matches the STAID of the STA itself. The processing in step S905 includes transmission of the BA frame after reception of the data frame, and retransmitted data frame reception processing. In step S906 after the STA performs the data frame reception processing in step S905, the STA performs data frame relay transmission processing. The processing in step S906 includes reception of the BA frame after transmission of the data frame, and data frame retransmission processing.

In step S904, in a case where the STA determines that the information on the relay communication apparatus of the data frame does not indicate the STA itself, the processing proceeds to step S907. In step S907, the STA determines whether the information on the destination communication apparatus of the data frame included in the User Info field indicates the STA itself. In a case where the information indicates the STA itself, the STA performs data frame reception processing in step S908. For example, in the case of using the Trigger frame illustrated in Fig. 6, the STA determines whether the RX STAID subfield of the last User Info field matches the STAID of the STA itself. In the case of using the Trigger frame illustrated in Fig. 7, the STA determines whether the Destination STAID subfield of the User Info field matches the STAID of the STA itself. The processing in step S908 includes transmission of the BA frame after reception of the data frame, and retransmitted data frame reception processing.

In the above-described manner, the AP shares the TXOP held by the AP to control the relay transmission by transmitting the Trigger frame for relay transmission control to the STA serving as the relay communication apparatus and the STA serving as the transmission source communication apparatus or the destination communication apparatus. As a result, as compared with a case where the AP directly communicates with the STA, it is possible to improve throughput and to expand a communication range.

### [Second Embodiment]

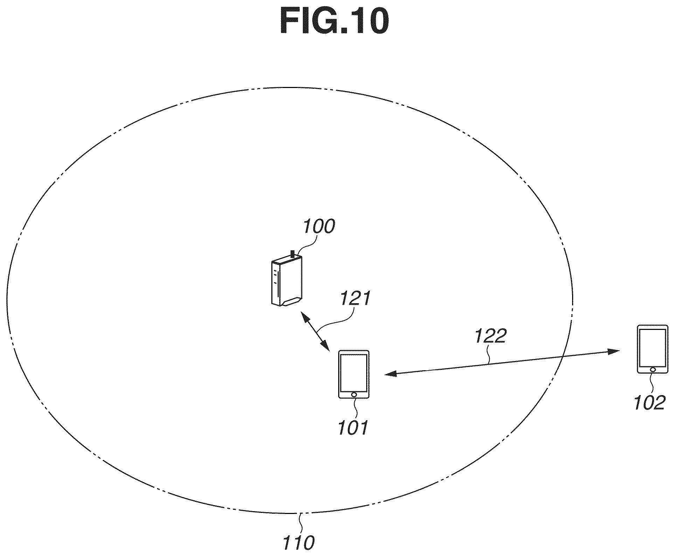

Fig. 10 illustrates a configuration of a network according to a second embodiment. In the present embodiment, the STA 101 is positioned within a communication range of the wireless network 110 of the AP 100, but the STA 102 is positioned outside the communication range of the wireless network 110 of the AP 100. The AP 100 cannot directly communicate with the STA 102, but can communicate with the STA 102 by relay transmission of the STA 101 via the communication link 121 between the AP 100 and the STA 101 and the communication link 122 between the STA 101 and the STA 102.

In the present embodiment, there is described an example in which the relay control apparatus performs relay transmission of not only the data frame but also the Trigger frame and a management frame, to control the relay transmission between the AP and the STA that is positioned outside the communication range of the AP.

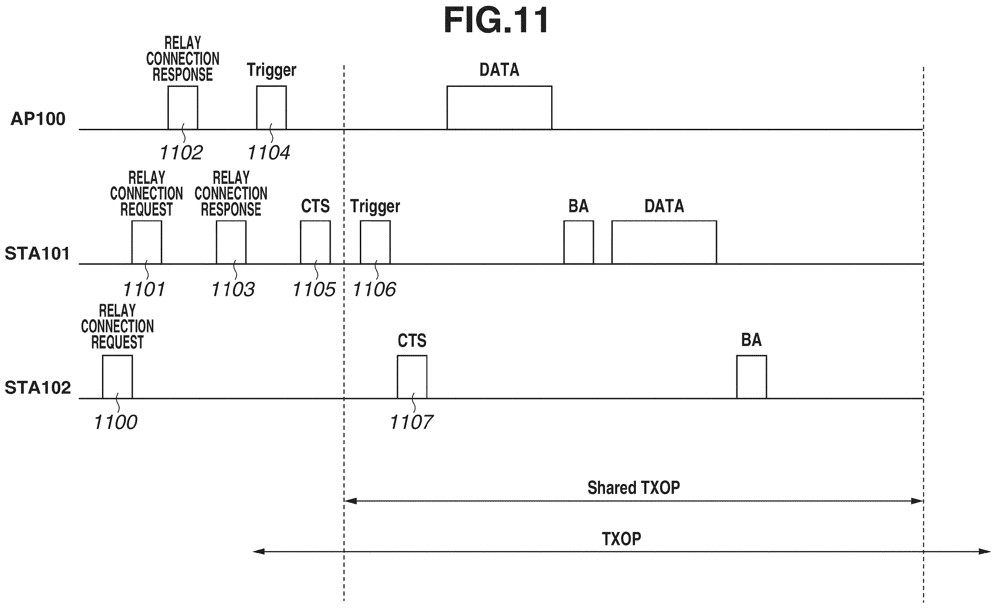

Fig. 11 is a diagram illustrating a third example of the message sequence among the communication apparatuses according to the present invention. In this example, the STA 101 serves as the relay communication apparatus, and relays and transmits a data frame transmitted from the AP 100, to the STA 102 positioned outside the communication range of the AP 100.

The STA 102 transmits a communication frame 1100 for requesting relay connection to the AP 100. The STA 102 can know that the AP is present outside the communication range of the STA 102, by monitoring communication frames transmitted from the STA 101 and a surrounding STA. The relay connection request frame may be, for example, an Association Request frame or another management frame. Next, the STA 101 that has received the relay connection request frame 1100 relays and transmits a relay connection request frame 1101 to the AP 100. The AP 100 that has received the relay connection request frame 1101 recognizes that the STA requesting relay connection is present, and transmits a response frame 1102 for allowing relay connection. The relay connection response frame may be, for example, an Association Response frame or another management frame. The STA 101 can receive the relay connection response frame 1102 because the STA 101 is positioned within the communication range of the AP 100, but the STA 102 cannot receive the relay connection response frame 1102 because the STA 102 is positioned outside the communication range of the AP 100. Thereafter, the STA 101 that has received the relay connection response frame 1102 relays and transmits a relay connection response frame 1103 to the STA 102.

Thereafter, the AP 100 generates and transmits a Trigger frame 1104 for relay transmission control including information on the transmission source communication apparatus, the relay communication apparatus, and the destination communication apparatus. The STA 101 can receive the Trigger frame because the STA 101 is positioned within the communication range of the AP 100, but the STA 102 cannot receive the Trigger frame because the STA 102 is positioned outside the communication range of the AP 100. The STA 101 that has received the Trigger frame 1104 transmits a CTS frame 1105 as a response, and then relays and transmits a Trigger frame 1106. The STA 102 that has received the Trigger frame 1106 transmits a CTS frame 1107 as a response. The subsequent transmission sequence of the data frame and the BA frame is similar to the transmission sequence in Fig. 4.

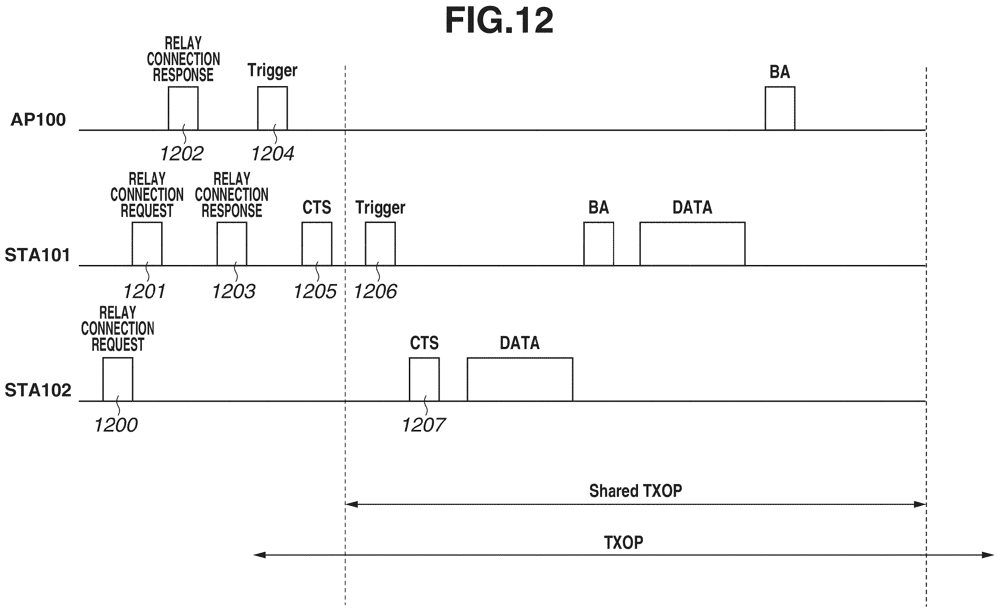

Fig. 12 is a diagram illustrating a fourth example of the message sequence among the communication apparatuses according to the present invention. In this example, the STA 101 serves as the relay communication apparatus, and relays and transmits a data frame transmitted from the STA 102 positioned outside the communication range of the AP 100, to the AP 100.

The STA 102 transmits a communication frame 1200 for requesting relay connection to the AP 100. The STA 102 can know that the AP is present outside the communication range of the STA 102, by monitoring a communication frame transmitted from the STA 101. The relay connection request frame may be, for example, an Association Request frame or another management frame. Next, the STA 101 that has received the relay connection request frame 1200 relays and transmits a relay connection request frame 1201 to the AP 100. The AP 100 that has received the relay connection request frame 1201 recognizes that the STA requesting relay connection is present, and transmits a response frame 1202 for allowing relay connection. The relay connection response frame may be, for example, an Association Response frame or another management frame. The STA 101 can receive the relay connection response frame 1202 because the STA 101 is positioned within the communication range of the AP 100, but the STA 102 cannot receive the relay connection response frame 1202 because the STA 102 is positioned outside the communication range of the AP 100. Thereafter, the STA 101 that has received the relay connection response frame 1202 relays and transmits a relay connection response frame 1203 to the STA 102.

Thereafter, the AP 100 generates and transmits a Trigger frame 1204 for relay transmission control including information on the transmission source communication apparatus, the relay communication apparatus, and the destination communication apparatus. The STA 101 can receive the Trigger frame because the STA 101 is positioned within the communication range of the AP 100, but the STA 102 cannot receive the Trigger frame because the STA 102 is positioned outside the communication range of the AP 100. The STA 101 that has received the Trigger frame 1204 transmits a CTS frame 1205 as a response, and then relays and transmits a Trigger frame 1206. The STA 102 that has received the Trigger frame 1206 transmits a CTS frame 1207 as a response. The subsequent transmission sequence of the data frame and the BA frame is similar to the transmission sequence in Fig. 5.

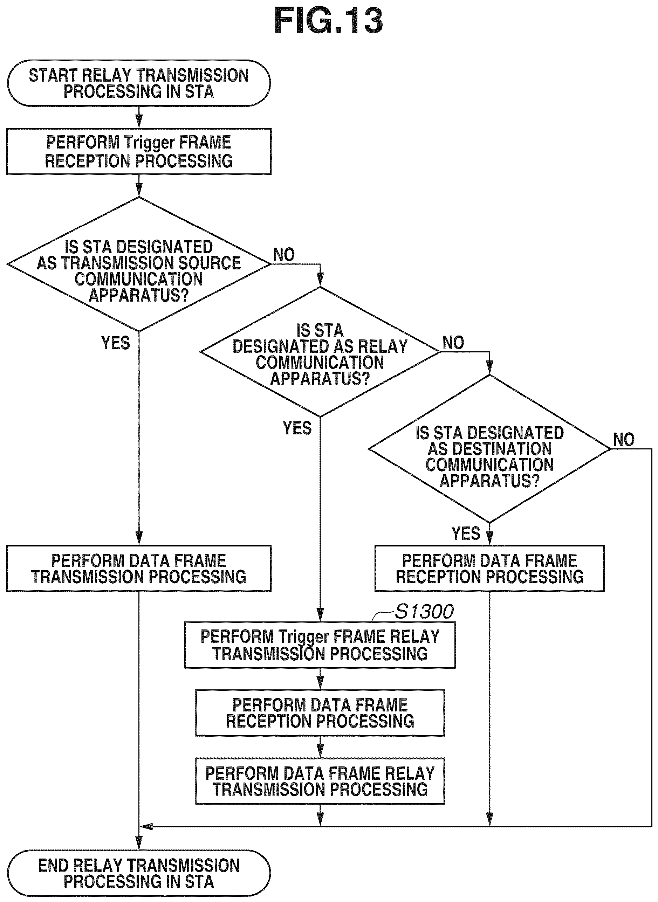

Fig. 13 is a flowchart illustrating a second example of the relay transmission processing in the STA according to the present invention. In this example, in a case where the STA operates as the relay communication apparatus, the STA relays and transmits a data frame between the AP and another STA positioned outside the communication range of the AP. The STA starts the processing in response to reception of the Trigger frame for controlling relay transmission. It is possible to determine whether the Trigger frame is the Trigger frame for controlling relay transmission, from values in the Trigger Type subfield and the Triggered TXOP Sharing Mode subfield of the Trigger frame illustrated in Fig. 6 or Fig. 7.

A difference from the relay transmission processing in the STA illustrated in Fig. 9 is only step S1300. In a case where the STA determines that the STA itself is designated as the relay communication apparatus based on the parameter in the received Trigger frame, the STA performs relay transmission processing of the received Trigger frame in step S1300. The processing also includes CTS frame reception processing after transmission of the Trigger frame.

In the above-described manner, it is possible to transmit the Trigger frame for relay transmission control including the information on the transmission source communication apparatus, the relay communication apparatus, and the destination communication apparatus of the data frame, also to the STA positioned outside the communication range of the AP. As a result, it is possible to relay and transmit the data frame also to the STA positioned outside the communication range of the AP.

The present invention is not limited to the above-descried embodiments, and can be variously changed and modified without departing from the spirit and the scope of the present invention. Therefore, to apprise the public of the scope of the present invention, the following claims are appended.

This application is based upon and claims the benefit of priority of the Japanese Patent Application No. 2023-048715 filed on March 24, 2023, the entire contents of which are incorporated herein by reference.

### Reference Signs List

- 100: AP
- 101: STA
- 102: STA
- 110: Network
- 121: Communication link
- 122: Communication link

## Claims

1. A communication apparatus including a communication unit configured to perform wireless communication at an access point complying with an Institute of Electrical and Electronics Engineers (IEEE)802.11 series standard, the communication apparatus comprising:
a unit configured to transmit a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a unit configured to transmit the data frame to the relay communication apparatus after the Trigger frame is transmitted.

2. A communication apparatus including a communication unit configured to perform wireless communication at an access point complying with an IEEE802.11 series standard, the communication apparatus comprising:
a unit configured to transmit a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a unit configured to receive the data frame from the relay communication apparatus after the Trigger frame is transmitted.

3. A communication apparatus including a communication unit configured to perform wireless communication at a station complying with an IEEE802.11 series standard, the communication apparatus comprising:
a unit configured to receive a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a unit configured to receive the data frame and to relay and transmit the data frame after the Trigger frame is received.

4. The communication apparatus according to Claim 3, further comprising a unit configured to relay and transmit the received Trigger frame.

5. A communication apparatus including a communication unit configured to perform wireless communication at a station complying with an IEEE802.11 series standard, the communication apparatus comprising:
a unit configured to receive a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a unit configured to receive the data frame from the relay communication apparatus after the Trigger frame is received.

6. A communication apparatus including a communication unit configured to perform wireless communication at a station complying with an IEEE802.11 series standard, the communication apparatus comprising:
a unit configured to receive a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a unit configured to transmit the data frame to the relay communication apparatus after the Trigger frame is received.

7. The communication apparatus according to any one of Claims 1 to 6, wherein the Trigger frame is a MU-RTS Trigger frame.

8. A communication method of performing wireless communication at an access point complying with an IEEE802.11 series standard, the communication method comprising:
a step of transmitting a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a step of transmitting the data frame to the relay communication apparatus after the Trigger frame is transmitted.

9. A communication method including a communication unit configured to perform wireless communication at an access point complying with an IEEE802.11 series standard, the communication method comprising:
a step of transmitting a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a step of receiving the data frame from the relay communication apparatus after the Trigger frame is transmitted.

10. A communication method including a communication unit configured to perform wireless communication at a station complying with an IEEE802.11 series standard, the communication method comprising:
a step of receiving a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a step of receiving the data frame, and relaying and transmitting the data frame, after the Trigger frame is received.

11. The communication method according to Claim 10, further comprising a step of relaying and transmitting the received Trigger frame.

12. A communication method including a communication unit configured to perform wireless communication at a station complying with an IEEE802.11 series standard, the communication method comprising:
a step of receiving a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a step of receiving the data frame from the relay communication apparatus after the Trigger frame is received.

13. A communication method including a communication unit configured to perform wireless communication at a station complying with an IEEE802.11 series standard, the communication method comprising:
a step of receiving a Trigger frame, the Trigger frame including information for identifying a transmission source communication apparatus as a transmission source of a data frame, information for identifying a destination communication apparatus as a destination of the data frame, and information for identifying a relay communication apparatus relaying and transmitting the data frame; and
a step of transmitting the data frame to the relay communication apparatus after the Trigger frame is received.

14. The communication method according to any one of Claims 8 to 13, wherein the Trigger frame is a MU-RTS Trigger frame.

15. A program for causing a computer to perform the communication method according to any one of Claims 8 to 13.
